(19) Europäisches Patentamt
European Patent Office
Office européen des brevets

(11) Veröffentlichungsnummer: **0 463 495 A2**

(12) # EUROPÄISCHE PATENTANMELDUNG

(21) Anmeldenummer: **91109717.8**

(22) Anmeldetag: **13.06.91**

(51) Int. Cl.5: **C08L 69/00**, C08L 61/14, C08G 8/28, //(C08L69/00,61:14, 25:12,55:02,27:18),(C08L65/00, 61:14,25:12,55:02,83:04)

(30) Priorität: **26.06.90 DE 4020258**

(43) Veröffentlichungstag der Anmeldung: **02.01.92 Patentblatt 92/01**

(84) Benannte Vertragsstaaten: **DE FR GB IT**

(71) Anmelder: **BAYER AG**

**W-5090 Leverkusen 1 Bayerwerk(DE)**

(72) Erfinder: **Fuhr, Karl, Dr.**
**Krüllsdyk 55**
**W-4150 Krefeld(DE)**
Erfinder: **Müller, Friedemann, Dr.**
**Am Steinacker 5**
**W-4040 Neuss(DE)**
Erfinder: **Ott, Karl-Heinz, Dr.**
**Paul-Klee-Strasse 54**
**W-5090 Leverkusen 1(DE)**
Erfinder: **Schoeps, Jochen, Dr.**
**Windmühlenstrasse 126**
**W-4150 Krefeld(DE)**
Erfinder: **Peters, Horst, Dr.**
**Winterbergstrasse 25**
**W-5090 Leverkusen 3(DE)**
Erfinder: **Ballas, Werner, Dr.**
**Iltisweg 26**
**W-4047 Dormagen 1(DE)**

(54) **Thermoplastische Polycarbonatformmassen mit flammwidrigen Eigenschaften.**

(57) Gegenstand der vorliegenden Erfindung sind flammwidrige Polycarbonatformmassen, die Pfropfpolymerisate sowie gegebenenfalls thermoplastische Copolymerisate bzw. und/oder Polyalkylenterephthalate und als Flammschutzmittel Phosphorsäureester von Novolaken in Kombination mit Antidrippingmitteln enthalten, sowie ein Verfahren zur Herstellung der Polycarbonatformmassen.

EP 0 463 495 A2

Gegenstand der vorliegenden Erfindung sind thermoplastische Formmassen enthaltend

A) 40 bis 90 Gewichtsteile, vorzugsweise 50 bis 70 Gewichtsteile, eines thermoplastischen aromatischen Polycarbonats,

B) gegebenenfalls ein thermoplastisches Copolymerisat, bzw. Polykondensat , bestehend aus

B.1) 0 bis 50 Gewichtsteilen, vorzugsweise 0 bis 35 Gewichtsteilen eines thermoplastischen Copolymerisats aus 50 bis 95 Gew.-% Styrol, α-Methylstyrol, kernalkyliertem Styrol, Halogen-Styrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus, und

B.2) 0 bis 80 Gewichtsteilen, vorzugsweise 0 bis 60 Gewichtsteilen, eines thermoplastischen Polyalkylenterephthalats,

C) 1 bis 25 Gewichtsteile, vorzugsweise 5 bis 20 Gewichtsteile, Pfropfpolymerisat hergestellt durch Pfropfung von

C.1) 5 bis 70 Gewichtsteilen, vorzugsweise 15 bis 60 Gewichtsteilen, einer Mischung aus:

C.1.1) 50 bis 95 Gew.-% Styrol, α-Methylstyrol, Halogenstyrol, kernalkyliertem Styrol, Methylmethacrylat oder Mischungen daraus und

C.1.2) 5 bis 50 Gew.-% (Meth)-Acrylnitril, Methylmethacrylat, Maleinsäureanhydrid, N-substituiertem Maleinimid oder Mischungen daraus auf

C.2) 30 bis 95 Gewichtsteilen, vorzugsweise 40 bis 85 Gewichtsteilen, eines Kautschuks mit einer Glastemperatur TG $\leqq 10^{\circ}$C aus z.B. Polybutadien-, Alkylacrylat-, EPDM-(Ethylen-Propylen-Dien-Monomer)- oder Silikonkautschuken,

D) 1 bis 25 Gewichtsteile, vorzugsweise 2 bis 20 Gewichtsteile, bezogen auf jeweils 100 Gewichtsteile Gesamtgewicht aus A), C) und gegebenenfalls B), einer Phosphorverbindung,

E) wenigstens ein Antidrippingmittel, bezogen auf 100 Gewichtsteile Gesamtgewicht aus A),C) und gegebenenfalls B), bestehend aus

E.1) 0,05 bis 5 Gewichtsteilen, vorzugsweise 0,1 bis 1,0 Gewichtsteilen, bezogen auf 100 Gewichtsteile A), C) und gegebenenfalls B) eines Tetrafluorethylenpolymerisats mit mittleren Teilchengrößen von 0,05 bis 20 µm und einer Dichte von 1,2 bis 1,9 g/$cm^3$, wobei vorzugsweise eine koagulierte Mischung von Emulsionen des Tetrafluorethylenpolymerisats E.1) mit Emulsionen von Pfropfpolymerisat C) eingesetzt wird, worin das Gewichtsverhältnis Pfropfpolymerisat C) zum Tetrafluorethylenpolymerisat E.1) zwischen 95:5 und 60:40 liegt und der Gehalt an Cofällung von C) und E.1) bezogen auf 100 Gewichtsteile A), C) und gegebenenfalls B), zwischen 0,1 und 20,0 Gewichtsteilen liegt, und/oder

E.2) 0,1 bis 10 Gewichtsteilen, vorzugsweise 0,2 bis 3,0 Gewichtsteilen, bezogen auf 100 Gewichtsteile A), C) und gegebenenfalls B) eines Silikonharzes der Summenformel (VII),

$$R_xSi(OR')_yO_{\frac{4-x-y}{2}} \qquad (VII)$$

worin

- R für einen einwertigen Kohlenwasserstofflest steht, der gegebenenfalls selbst substituiert sein kann, insbesondere aber eine Methylgruppe und/oder Phenylgruppe bedeutet,
- R' eine Alkylgruppe oder Wasserstoff ist,
- x einen Wert von 0,75 bis 1,75 und
- y einen Wert von 0,0001 bis 0,5 besitzen

und worin das Silikonharz aufgebaut ist aus Einheiten der Formel $SiO_{4/2}$, $RSiO_{3/2}$, $R_2SiO_{2/2}$ und/oder $R_3SiO_{1/2}$,

wobei vorzugsweise eine koagulierte Mischung von Emulsionen des Silikonharzes E.2) gegebenenfalls auch eine Emulsion einer Lösung von ihm z.B. in Toluol, mit Emulsionen von Pfropfpolymerisat C) eingesetzt wird, worin das Gewichtsverhältnis Pfropfpolymerisat C) zum Silikonharz E.2) zwischen 99,9:0,1 und 50:50 Gew.-% liegt und der Gehalt an Cofällung von C) und E.2) bezogen auf 100 Gewichtsteile A), C) und gegebenenfalls B), zwischen 0,1 und 30,0 Gewichtsteilen liegt, die dadurch gekennzeichnet sind, daß sie als Phosphorverbindungen D) solche der Formel (I) enthalten,

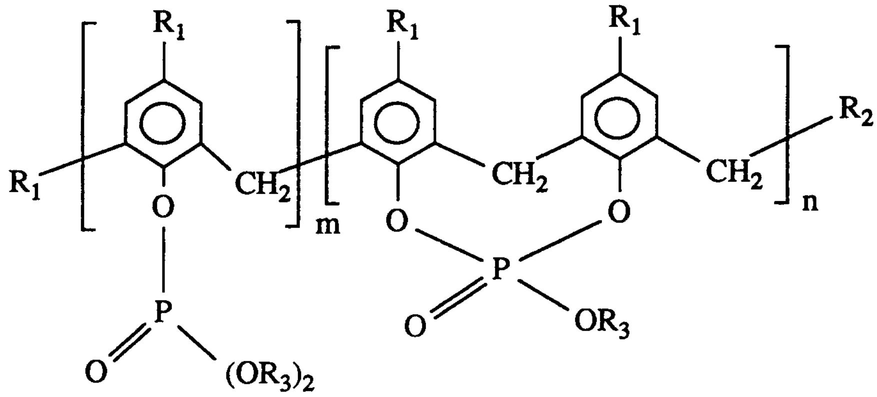

worin

$R_1$ Wasserstoff oder Alkyl mit 1 bis 8 Kohlenstoffatomen, bevorzugt Methyl,

$R_2$

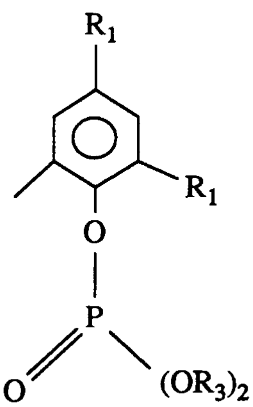

oder

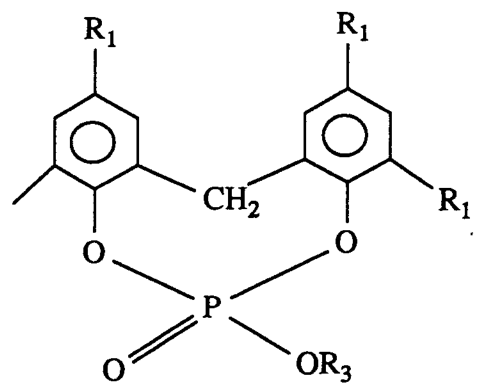

und

$R_3$ Phenyl, wobei dieses durch Alkyl mit 1 bis 4 Kohlenstoffatomen, Phenyl und Aralkyl, wie Benzyl oder 2-Phenyl-ethyl, substituiert sein kann, sind,

worin bei m gleich null n mindestens 1 und $R_2$ gleich

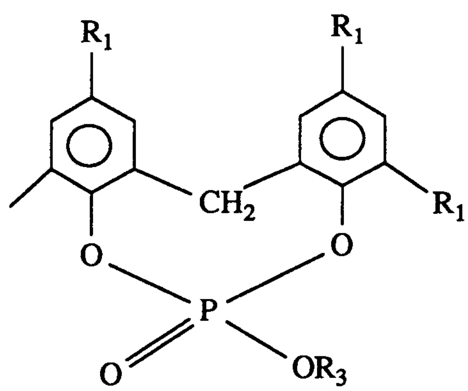

sein muß, worin bei n gleich null m mindestens 2 und $R_2$ gleich

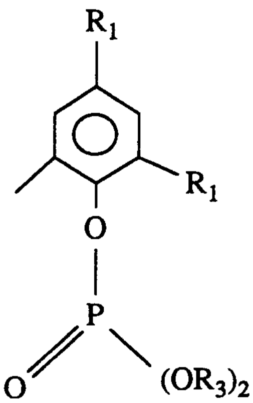

sein muß, und worin m eine ganze Zahl von Null bis 12 und n eine ganze Zahl von Null bis 5 sind, wobei die Kernzahl des Polyphenolmoleküls, also die Zahl der Benzolringe der Verbindung (I) ohne die Reste $R_3$, nicht höher als 12 ist.

Polycarbonatformmassen, die Phosphatester der Formel (II) enthalten,

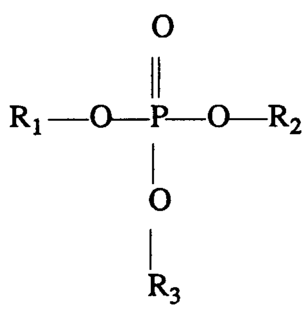

(II)

worin

$R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste darstellen, sind bekannt (siehe DE-OS 3 429 481 (Le A 23 063) und DE-OS 3 430 234 (Le A 22 925)). Die Verbindungen der Formel (I) kommen darin jedoch nicht vor.

Polycarbonatformmassen, die Phosphorverbindungen der Formel (III) enthalten,

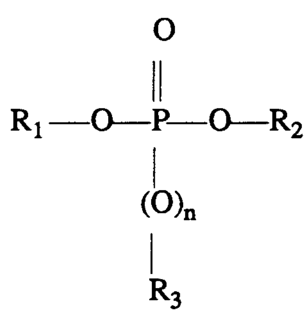

(III)

worin

$R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und "n" 0 oder 1 ist, sind ebenfalls bekannt.

(Siehe EP-OS 0 174 493 (Le A 23 043-EP), DE-OS 3 444 869 (Le A 23 527), DE-OS 3 444 868 (Le A 23 502), DE-OS 3 516 807 (Le A 23 790), DE-OS 3 521 888 (Le A 23 877), DE-OS 3 523 316 (Le A 23 927), DE-OS 3 523 314 (Le A 23 940), DE-OS 3 545 609 (Le A 23 039), DE-OS 3 615 768 (Le A 24 500), DE-OS 3 617 511 (Le A 24 501), DE-OS 3 628 904 (Le A 24 683) und DE-OS 3 629 546 (Le A 24 695)).

Die Verbindungen der Formel (I) sind darin wiederum nicht genannt.

Nachteilig bei diesen Formmassen mit einem Gehalt an Phosphaten der Formeln (II) und (III) ist vorwiegend, daß die in diesen Literaturstellen beschriebenen Phsophorsäureester unter Herstell- und Verarbeitungsbedingungen teilweise flüchtig sind. Eine Molekulargewichtserhöhung der Phosphate durch Verlängerung der Alkylketten an Aromaten reduziert im allgemeinen kaum die Flüchtigkeit, führt jedoch zu einer Wirksamkeitsminderung der Phosphate für flammwidrige Einstellungen, da der Phosphorgehalt abnimmt. Zur Wiederherstellung der flammwidrigen Eigenschalten müssen daher größere Mengen an Phosphoradditiven eingesetzt werden, die z.B. die Vicattemperatur in unerwünschter Weise herabsetzen.

Bekannt ist auch, Polycarbonatformmassen durch Polyphosphate flammwidrig auszurüsten (siehe US-Patente 4 463 130 (Le A 21 835) und 4 481 338 (Le A 21 841)). Polymere Phosphate senken zwar die Wärmeformbeständigkeit nur geringfügig herab, weisen jedoch den Nachteil auf, daß das gwünschte Maß an Fließfähigkeit nicht erreicht wird.

Phosphorsäureester von Polyphenolen, die auch als Novolake bezeichnet werden, sind als Flammschutzmittel für Polyolefine in Verbindung mit großen Füllstoffmengen und Peroxiden bekannt (US 4 105 825). Polycarbonatformmassen werden nicht erwähnt.

Überraschend wurde gefunden, daß Novolak/Phenolester der Phosphorsäure allein Polycarbonatformmassen einen Flammschutz geben, der der UL 94-Beurteilung V-0 bei Prüfkörpern von 1,6 mm Dicke zukommt, wobei das Fließverhalten verbessert und die Wärmeformbeständigkeit auf einem hohen Niveau erhalten bleibt. Bei den erfindungsgemäßen Polycarbonatformmassen sind unter Erhaltung der hohen Flammwidrigkeit (V-0 bei 1,6 mm Dicke) Vicattemperaturen bis zu 130 °C möglich. Sie werden praktisch nicht mehr abgesenkt.

Die erfindungsgemäß geeigneten Polycarbonate gemäß Komponente A) können sowohl Homopolycarbonate als auch Copolycarbonate aus den Diphenolen der Formel (IV) sein.

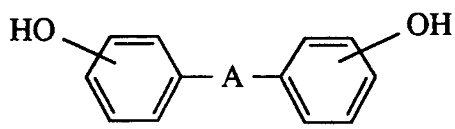

(IV)

Darüber hinaus können die Polycarbonate der Komponente A) insbesondere auch Copolycarbonate aus den Diphenolen (IV) und (IVa) sein,

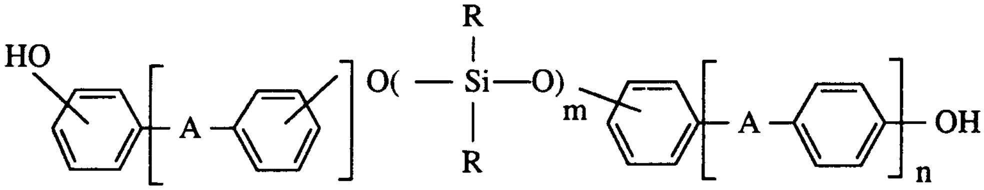

(IVa)

worin A eine Einfachbindung, $C_1$-$C_5$-Alkylen, $C_2$-$C_5$-Alkyliden, ein $C_5$-$C_6$-Cycloalkyliden, das noch durch Methylgruppen substituiert sein kann, -O-; -S-, -$SO_2$- ist, die aromatischen Bereiche durch Methylgruppen oder Halogenatome substituiert sein können, n = 1 oder null ist, die R's gleich oder verschieden und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine Zahl zwischen 5 und 100, vorzugsweise zwischen 20 und 80 ist, und wobei der Gewichtsanteil an Diphenolen der Formel (IVa) in den Copolycarbonaten jeweils so bemessen ist, daß der Gehalt an Diorganosiloxy-Einheiten (V)

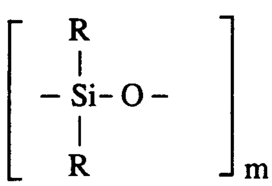

(V)

in Polycarbonat A) zwischen 1 und 25 Gew.-%, vorzugsweise zwischen 2,5 und 25 Gew.-%, beträgt.

Die Polycarbonate gemäß Komponente A) können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei, sein.

Die Polycarbonate der Komponente A) können sowohl einzeln als auch im Gemisch eingesetzt werden. In den Fällen, in denen die Komponente A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt im Polycarbonatgemisch wiederum zwischen 1 und 25 Gew.-% liegt.

Die Diphenole der Formel (IV) sind entweder literaturbekannt oder Gegenstand der deutschen Patentanmeldung P 3 842 931.4 (Le A 26 318) oder nach literaturbekannten Verfahren herstellbar; Polydiorganosiloxane mit Hydroxyaryloxy-Endgruppen gemäß Formel (IVa) sind ebenfalls bekannt (siehe z.B. US-Patent 3 419 634) bzw. nach literaturbekannten Verfahren herstellbar.

Die Herstellung der erfindungsgemäß geeigneten Polycarbonate gemäß Komponente A) ist literaturbekannt oder Gegenstand der deutschen Patentanmeldung P 3 842 931.4 (Le A 26318) und kann z.B: mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Die Darstellung von polydiorganosiloxanhaltigen Polycarbonaten ist z.B. in DE-OS 3 334 782 beschrieben.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Offenlegungsschrift 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (IV) und (IVa).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei-oder mehr als dreifunktionellen Verbindungen, z.B. solchen mit drei oder mehr als drei phenolischen OH-Gruppen.

Sie haben mittlere Gewichtsmittelmolekulargewichte ($\overline{M}_w$, gemessen z.B. durch Ultrazentrifugation oder Streulichtmessung) von 10.000 bis 200.000, vorzugsweise von 20.000 bis 80.000.

Geeignete Diphenole der Formel (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan oder 1,1-Bis-(4-hydroxyphenyl-3,3,5-trimethylcyclohexan.

Bevorzugte Diphenole der Formel (IV) sind 2,2-Bis-(4-hydroxyphenyl)-propan und 1,1-Bis-(4-hydroxyphenyl)-cyclohexan. Es können auch Mischungen von Diphenolen eingesetzt werden.

Geeignete Diphenole der Formel (IVa) sind solche, in denen R Methyl, Ethyl, Propyl, n-Butyl, tert.-Butyl und Phenyl ist. Es können auch Mischungen von Diphenolen der Formel (VIa) eingesetzt werden.

Bevorzugte Diphenole der Formel (IVa) sind die der Formel (IVb),

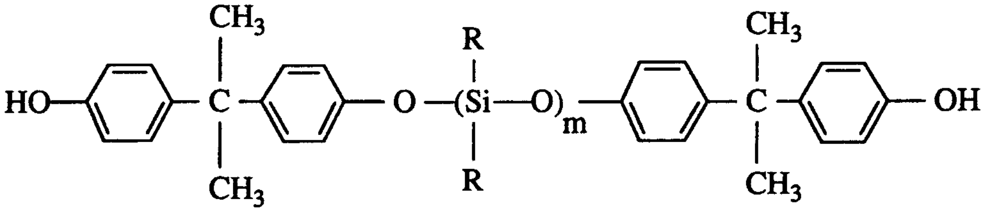 (IVb)

worin die R's gleich sind und die vorstehend genannte Bedeutung haben, also Methyl etc. und Phenyl bedeuten und m wiederum eine ganze Zahl zwischen 5 und 100, vorzugsweise zwischen 20 und 80, ist.

Bevorzugte Polydiorganosiloxan-Polycarbonat-Blockcopolymere sind Copolycarbonate der Diphenole der Formel (IV) mit Diphenolen der Formel (IVb).

Erfindungsgemäß geeignete thermoplastische Copolymerisate gemäß Komponente B1) sind harzartig, thermoplastisch und kautschukfrei. Besonders bevorzugte Polymerisate sind solche aus Styrol, α-Methylstyrol, kernalkyliertem Styrol, Halogenstyrol oder Mischungen daraus mit Acrylnitril, Methacrylnitril, Alkylacrylat, Alkylmethacrylat, Maleinsäureanhydrid, N-substituiertem Maleinimid, Vinylacetat oder Mischungen daraus. Unter kernsubstituierten Styrolen sind kernalkylierte Styrole, wie z.B. p-Methylstyrol, zu verstehen.

Besonders bevorzugte Gewichtsverhältnisse im thermoplastischen Polymerisat sind z.B. 60 bis 80 Gew.-% Styrol, α-Methylstyrol, kernsubstituiertes Styrol, Halogenstyrol oder Mischungen daraus und 20 bis 40 Gew.-% Acrylnitril.

Die Polymerisate gemäß Komponente B1) sind bekannt und lassen sich durch Emulsions-, Suspensions-, Lösungs- oder Massepolymerisation herstellen. Die Polymerisate besitzen vorzugsweise Molekulargewichte $\overline{M}_w$ (Gewichtsmittel, ermittelt durch Lichtstreuung oder Sedimentation) zwischen 15.000 und 200.000. Die Polyalkylenterephthalate der Komponente B2) sind Reaktionsprodukte aus aromatischen Dicarbonsäuren oder ihren reaktionsfähigen Derivaten, wie Dimethylestern oder Anhydriden und aliphatischen, cycloaliphatischen oder araliphatischen Diolen sowie Mischungen dieser Reaktionsprodukte.

Bevorzugte Polyalkylenterephthalate enthalten mindestens 80, vorzugsweise mindestens 90, Gew.-%, bezogen auf die Dicarbonsäurekomponente Terephthalsäurereste und mindestens 80, vorzugsweise mindestens 90, Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäruen mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ Kleiner Mengen 3-oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30, Gew.-% Polyethylenterephthalat und 50 bis 99, vorzugsweise 70 bis 99, Gew.-% Polybutylenterephthalat.

Die vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25 °C im Ubbelhode-Viskosimeter.

Die Polyalkylenterephthalate lassen sich nach bekannten Methoden herstellen (s. z.B: Kunststoff-Handbuch, Band VIII, S. 695 ff., Carl-Hanser-Verlag, München 1973).

Zur Herstellung der Pfropfpolymerisate gemäß Komponente C) geeignete Kautschuke sind insbesondere Polybutadiene, Polychloroprene, Polyisoprene, Styrol-Butandiencopolymerkautschuke, Acrylnitril-Butadien-Copolymerkautschuke mit Gelgehalten (gemessen bei 20 °C) größer als 30 Gew-%, Acrylatkautschuke, EPDM (Ethylen-Propylen-Dien-Monomer)-Kautschuke und Silikonkautschuke. Geeignete Butadien-Styrol-Copolymerkautschuke können bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat) enthalten.

Geeignete Alkylacrylatkautschuke sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, kernalkyliertes Styrol, Halogenstyrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B: Alkylendioldi-(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten

Monomerem, wie Styrol und/oder Acrylnitril, als Kern enthalten.

Die erfindungsgemäß geeigneten Silikonkautschuke enthalten in dispergierter Form wenigstens teilvernetzte, teilchenförmige Silikonkautschuke mit im wesentlichen chemisch eingebauten Gruppen der allgemeinen Formeln

a) $R_2SiO_{2/2}$, $RSiO_{3/2}$, $R_2R^3SiO_{1/2}$, $SiO_{4/2}$ und gegebenenfalls Gruppen der Formel

b) $R^1CH=CH-(R^2)-$, gegebenenfalls in Kombination mit SH-Gruppen

wobei

R = einwertiger, gesättigter Kohlenwasserstoffrest, insbesondere $-CH_3$, $C_6H_5$, gegebenenfalls durch -SH, Halogen, $C_1$-$C_6$-Oxalkyl substituiert,

$R^1$ = H, $C_1$-$C_6$-Alkyl, insbesondere H, $CH_3$,

$R^2$ = Einfachbindung, $C_1$-$C_4$-Alkylen, insbesondere $-CH_2-$, $-C_2H_4-$ und

$R^3$ = R oder OH ist.

Die Mengen der einzelnen Siloxaneinheiten sind dabei so bemessen, daß auf 100 Mol-Einheiten der Formel $R_2SiO_{2/2}$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind. In bevorzugten Silikonkautschuken sind mindestens 80 % aller Reste R $CH_3$-Gruppen.

Im Falle der Gruppe $R_2R^3SiO_{1/2}$ ist desweiteren möglich, daß einer der drei Reste R eine Hydroxylgruppe darstellt. Besonders bevorzugte Endgruppe ist die Dimethylhydroxysiloxyeinheit.

Die Silikonkautschuke enthalten die Gruppen b) in Mengen von 2 bis 10 Mol-%, bezogen auf die Gesamtheit aller Reste R.

Bevorzugte Kautschuke zur Herstellung der Pfropfpolymerisate C) sind Dien-, Alkylacrylat- und Silikonkautschuke.

Die Kautschuke liegen in den Pfropfpolymerisaten C) in Form wenigstens partiell vernetzter Teilchen einer mittleren Teilchengröße von 0,1 bis 3,0 µm, insbesondere 0,2 bis 0,6 µm, vor. Sie sind wenigstens teilvernetzt, d.h. sie besitzen Gelgehalte von größer 20 Gew.-%, besonders größer 50 Gew.-%, besonders bevorzugt im Bereich von 73 bis 98 Gew.-%.

Die Pfropfpolymerisate C) werden durch radikalische Pfropfcopolymerisate der eingangs definierten Monomergemische aus C.1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse- oder Suspensionspolymerisation. Besonders bevorzugte Pfropfpolymerisate C) sind die sogenannten ABS-Polymerisate.

Die erfindungsgemäß geeigneten Phosphorverbindungen gemäß Komponente D) sind generell nach bekannten Verfahren herstellbar (siehe für Novolake: Houben-Weyl, Methoden der organischen Chemie, Band XIV/2, Seiten 193-292, und Ullmanns Encyclopädie der Technischen Chemie, 4. Auflage, Band 18, Seiten 245-257; für Phosphate: beispielsweise Ullmanns Encyclopädie der technischen Chemie 4. Auflage, Band 18, Seiten 389-391, 1979 und Houben-Weyl, Methoden der Organischen Chemie, Band 12/1, Seiten 299-374.

Geeignete Novolake sind Kondensationsprodukte aus Formaldehyd und Phenolen der allgemeinen Formel (VI),

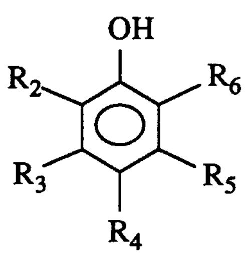

(VI)

worin $R_2$ und $R_6$ Wasserstoffatome bezeichnen und $R_3$, $R_4$ und $R_5$ wahlweise gleich Wasserstoff, Halogen, $C_1$-$C_{20}$-Alkyl-, Cycloalkyl- oder $C_6$-$C_{10}$-Aryl-Gruppen sein können oder worin $R_2$ und $R_4$ Wasserstoffatome bezeichnen und $R_3$, $R_5$ und $R_6$ gleich den vorstehend genannten Resten sein können.

Charakteristische Beispiele für Phenole sind, ohne damit eine Einschränkung zu treffen, Phenol, o-Kresol, m-Kresol, p-Kresol, 2,5-Dimethyl-, 3,5-Dimethyl-, 2,3,5-Trimethyl-,3,4,5-Trimethyl-,p-t-Butyl-,p-n-Octyl-,p-Stearyl-,p-Phenyl-, p-(2-Phenylethyl)-, 1-Phenylethyl-, o-Isopropyl-, p-Isopropyl- und m-Isopropylphenol; geeignet sind aber auch zahlreiche andere Phenole.

Bevorzugt eingesetzt werden Phenol, o-Kresol, m-Kresol, p-Kresol, p-t-Butylphenol, o-t-Butylphenol und

p-Octylphenol.

Es können aber auch Gemische aus diesen Phenolen eingesetzt werden.

Bevorzugt eingesetzte Novolake sind demnach, ohne damit eine Einschränkung zu treffen:
Phenol/Formaldehyd-Novolak,
o-Kresol/Formaldehyd-Novolak,
m-Kresol/Formaldehyd-Novolak,
p-Kresol/Formaldehyd-Novolak,
t-Butylphenol/Formaldehyd-Novolak und
p-Octylphenyl/Formaldehyd-Novolak.

Besonders bevorzugt wird der p-Kresol/Formaldehyd-Novolak.

Zur Herstellung der erfindungsgemäßen Novolak-Phosphatester werden im sogenannten Umesterungsverfahren Novolake mit Triarylestern der Phosphorsäure und im sogenannten Säurechloridverfahren Gemische von Novolaken und Phenolen mit Phosphoroxychlorid zur Umesterung gebracht. Beim Umesterungsverfahren wird bevorzugt Triphenylphsophat eingesetzt. Bei beiden Verfahren können als zusätzliche Phenole Aryl- und Aralkylphenole wie 4-Phenylphenol, Benzylphenol, 1-Phenylethyl-phenol, 1-Methyl-1-phenylethyl-phenol und 2,4-Di-(Phenylethyl)-phenol mitverwendet werden.

Als Besonderheit bei den Phosphorsäureestern von Novolaken ist festzustellen, daß aufgrund der Mehrwertigkeit der Phosphosäure wie auch der von Novolaken sowohl offene als auch cyclische Strukturen auftreten können, je nachdem, ob jeweils eine Valenz oder 2 Valenzen jeweils eines Moleküls miteinander reagiert haben. Denkbare Vernetzungsreaktionen aufgrund der Mehrwertigkeit der Reaktionspartner treten üblicherweise nicht auf.

Erfindungsgemäß geeignete Phosphorverbindungen gemäß Komponente D), Formel I), sind beispielsweise die Umsetzungsprodukte aus 1 Mol Triphenylphosphat bzw. Phosphorsäuretrichlorid und 1 oder 2 Äquivalente Novolak. Mengenverhältnisse zwischen 1 und 2 Äquivalenten Novolak sind ebenfalls möglich. Die 3. Valenz der Phosphorsäure ist, wie oben dargestellt, an Phenol oder ein substituiertes Phenol gebunden.

Die erfindungsgemäß geeigneten Tetrafluorethylenpolymerisate gemäß Komponente E.1) sind Polymere mit Fluorgehalten von 65 bis 76 Gew.-%, vorzugsweise 70 bis 76 Gew.-%. Beispiele sind u.a Polytetrafluorethylen, Tetrafluorethylen-Hexafluorpropylen-Copolymere oder Tetrafluroethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat, bei Drücken von 7 bis 71 $kg/cm^2$ und bei Temperaturen von 0 bis 200 °C, vorzugsweise bei Temperaturen von 20 bis 100 °C (nähere Einzelheiten siehe beispielsweise US-Patent 2 393 967).

Die erfindungsgemäß geeigneten Silikonharze E.2) weisen die Summenformel (VII) auf,

$$R_xSi(OR')_yO_{\frac{4-x-y}{2}} \qquad (VII)$$

worin R für einen einwertigen Kohlenwasserstoffrest steht, der gegebenenfalls selbst substituiert sein kann, insbesondere aber eine Methylgruppe- und/oder Phenylgruppe bedeutet, worin R' eine Alkylgruppe oder ein Wasserstoffrest ist, x einen Wert von 0,75 bis 1,75 und y einen Wert von 0,0001 bis 0,5 besitzen und worin das Silikonharz aufgebaut ist aus Einheiten der Formel $SiO_{4/2}$, $RSiO_{3/2}$, $R_2SiO_{2/2}$ und/oder $R_3SiO_{1/2}$.

Bevorzugte Silikonharze E.2) der Formel (VII) sind solche, in denen mindestens 80 Gew.-% aller Reste R Methyl- und Phenylgruppen sind.

Nähere Einzelheiten zu den Silikonharzen E.2) sind in der deutschen Offenlegungsschrift 3 815 124 (Le A 25 925) beschrieben.

Durch den Zusatz von Tetrafluorethylenpolymerisaten oder Silikonharzen wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus den Komponenten A), C), D), gegebenenfalls B) sowie einem Polytetrafluorethylen-Pulver E.1) und/oder einem Silikonharz E.2) her, so werden zwar Formmassen hoher Flammwidrigkeit erhalten; Formkörper daraus haben aber manchmal eine mangelhafte Oberfläche, beispielsweise Mikrorisse oder Schlieren.

Das wird mit Sicherheit vermieden, wenn sehr feinteilige und zudem ungesinterte Tetrafluorethylenpolymerisate E.1) in Form einer koagulierten Mischung von Emulsionen der Tetrafluorethylenpolymerisate mit Emulsionen der Pfropfpolymerisate C) und/oder die Silikonharze E.2) in Form von Emulsionen der Silikonharze E.2) mit Emulsionen oder Dispersionen der Pfropfpolymerisate C) eingesetzt werden.

Zur Herstellung einer entsprechenden Mischung mit Tetrafluorethylenpolymerisat E.1) wird zuerst eine wäßrige Emulsion (Latex) eines Pfropfpolymerisates C) mit mittleren Latexteilchengrößen von 0,05 bis 30,0 µm, insbesondere 0,02 bis 5,0 µm, ganz besonders von 0,2 bis 0,6 µm, mit einer feinteiliegen Emulsion eines Tetrafluorethylenpolymerisats E.1) in Wasser mit mittleren Teilchengrößen von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die einzusetzenden Emulsionen der Pfropfpolymerisate C) besitzen Feststoffgehalte von 20 bis 60 Gew.-%, insbesondere von 30 bis 45 Gew.-%.

In der Emulsionsmischung liegt das Gewichtsverhältnis Pfropfpolymerisat C) zum Tetrafluorethylenpolymerisat E.1) zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150 °C, insbesondere von 50 bis 100 °C. Falls erforderlich, kann bei 50 bis 200 °C, bevorzugt 70 bis 100 °C, getrocknet werden.

Geeignete Tetrafluorethylenpolymerisat-Emulsionen sind handelsübliche Produkte und werden beispielsweise von der Firma DuPont als Teflon® 30 N angeboten.

Die Herstellung der pulverförmigen Polymermischungen aus Silikonharz E.2) und Pfropfpolymerisat C) (gemäß deutscher Offenlegungsschrift 3 815 124 (Le A 25 925)) erfolgt dadurch, daß man

I. eine Dispersion eines organischen, thermoplastischen Polymerisats C) mit einem mittleren Teilchendurchmesser ($d_{50}$) von 0,05 bis 30 µm, vorzugsweise von 0,05 bis 5,0 µm, ganz besonders von 0,2 bis 0,6 µm, und mit einem Feststoffgehalt von 20 Gew.-% bis 60 Gew.-%, bezogen auf Gewicht Dispersion der Komponente C), mit einer Emulsion eines Silikonharzes E.2) der Formel (VII) mit einem mittleren Teilchendurchmesser ($d_{50}$) von 0,05 bis 3 µm, vorzugsweise von 0,1 bis 1 µm, und mit einem Feststoffgehalt bis zu 60 Gew.-%, vorzugsweise von 30 Gew.-% bis 50 Gew.-%, bezogen auf Gewicht Emulsion der Komponente E.2) so innig und in solchen Mengenverhältnissen vermischt, daß praktisch keine Agglomeration der Teilchen stattfindet, und daß Mischungen von 0,1 Gew.-% bis 50 Gew.-%, vorzugsweise mit 5 Gew.-% bis 40 Gew.-% und insbesondere mit 8 Gew.-% bis 20 Gew.-% Silikonharz E.2) mit 99,9 Gew.-% bis 50 Gew.-%, vorzugsweise 95 Gew.-% bis 60 Gew.-% und insbesondere 92 Gew.-% bis 80 Gew.-% thermoplastischem Polymerisat C), bezogen auf Gesamtsumme aus Silikonharz E.2) und thermoplastischem Polymerisat C), vorliegen,

II. die so erhaltene Mischung bei 20 °C bis 120 °C und pH-Werten von 7 bis 2, vorzugsweise von 5 bis 3, unter Bildung einer feinteiligen Mischung der Komponenten C) und E.2) in bekannter Weise koaguliert und

III. nach Isolierung dieses Koagulats bei Temperaturen von 50 °C bis 150 °C, insbesondere von 80 °C bis 120 °C in bekannter Weise trocknet.

Da der Einsatz der erfindungsgemäß zu verwendenden Pfropfpolymerisate C) durch Vorabmischung ihrer Emulsionen mit Emulsionen der Komponente E) erfolgt, ist die Herstellung der Komponente C) nach dem Verfahren der Emulsionspolymerisation am zweckmäßigsten. Das eingesetzte Verhältnis von Polytetrafluorethylen E.1) und Pfropfpolymerisat C) ist so zu wählen, daß der Gesamtgehalt an E.1) in der Mischung aus A), C) und gegebenenfalls B) zwischen 0,05 und 5,0 Gewichtsteilen, bevorzugt zwischen 0,1 und 1,0 Gewichtsteilen, liegt. Das entsprechende Verhältnis von Silikonharz E.2) zu Pfropfpolymerisat C) ist so zu wählen, daß der Gesamtgehalt an Silikonharz E.2) in der Mischung aus A), C) und gegebenenfalls B) zwischen 0,1 und 10,0 Gewichtsteilen, bevorzugt zwischen 0,2 und 3,0 Gewichtsteilen, liegt.

Die erfindungsgemäßen thermoplastischen Formmassen können weitere Thermoplasten wie Polysulfone, Polyethersulfone, Polyketone, Polyetherketone, Polyphenylenether, Polyarylensulfide sowie weitere Zusätze wie Stabilisatoren, Pigmente, Fließmittel, Entformungsmittel und/oder Antistatika enthalten.

Gegenstand der vorliegenden Erfindung sind somit auch Polycarbonatformmassen enthaltend die Komponenten A), C), D), E) und gegebenenfalls B), thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel und/oder Antistatika.

Die erfindungsgemäßen thermoplastischen Formmassen enthaltend die Komponenten A), C), D), E) sowie gegebenenfalls B), thermoplastische Polysulfone, thermoplastische Polyethersulfone, thermoplastische Polyketone, thermoplastische Polyetherketone, thermoplastische Polyphenylenether, thermoplastische

Polyarylensulfide, Stabilisatoren, Pigmente, Fließmittel, Entformungsmittel und/oder Antistatika werden hergestellt, indem man die jeweiligen Bestandteile in bekannter Weise vermischt und bei Temperaturen von 200 bis 330 °C in üblichen Aggregaten wie Innenknetern, Extrudern oder Doppelwellenschnecken schmelzcompoundiert oder schmelzextrudiert, oder indem man die Lösungen der jeweiligen der vorstehend genannten Bestandteile in geeigneten organischen Lösungsmitteln, beispielsweise in Chlorbenzol, mischt und die Lösungsgemische in üblichen Aggregaten, beispielsweise in Eindampfextrudern, eindampft.

Die Vermischung der einzelnen Bestandteile kann in bekannter Weise sowohl sukzessiv als auch simultan erfolgen, und zwar sowohl bei etwa 20 °C (Raumtemperatur) als auch bei höherer Temperatur.

Gegenstand der vorliegenden Erfindung ist somit auch ein Verfahren zur Herstellung von thermoplastischen Polycarbonatformmassen enthaltend die Komponenten A), C), D), E) und gegebenenfalls B), Polysulfone, Polyethersulfone, Polyketone, Polyetherketone, Polyphenylenether, Polyarylensulfide, Stabilisatoren, Pigmente, Fließmittel, Entformungsmittel und/oder Antistatika, das dadurch gekennzeichnet ist, daß man die jeweiligen der vorstehend genannten Bestandteile in bekannter Weise vermischt und danach bei Temperaturen von 200 °C bis 330 °C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art, Abdeckplatten für den Bausektor oder Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782-786.

## Beispiele

### A. Eingesetzte Komponenten

I. Aromatisches Polycarbonat aus 10 Gew.-% Tetrabrombisphenol A und 90 Gew.-% Bisphenol A mit relativer Viskosität, gemessen in Methylenchlorid bei 25 °C, von 1,284 (0,5 gew.-%ige Lösung).

II. Aromatisches Polycarbonat aus 100 Gew.-% Bisphenol A mit realtiver Viskosität, gemessen in Methylenchlorid bei 25 °C, von 1,284 (0,5 gew.-%ige Lösung).

III. Aromatisches oligomeres Carbonat aus 100 Gew.-% Tetrabrombisphenol A, Great Lakes BC-52-HP der Firma Great Lakes Chem. Corp., USA.

IV. Thermoplastisches Polymerisat aus Styrol und Acrylnitril mit einem Acrylnitrilgehalt von 29 Gew.-% und einem mittleren Molekulargewicht von 60.000.

V. Polyethylenterephthalat mit einer Intrinsic-Viskosität von 1,20 dl/g, gemessen in Phenol/o-Dichlorbenzol-Gemisch (Gewichtsverhältnis 1:1), 25 °C, Ubbelohde-Viskosimeter.

VI. ABS-Pfropfpolymerisat von 50 Gew.-% Styrol-Acrylnitrilgemisch (im Verhältnis 72:28) auf 50 Gew.-% teilchenförmigem Polybutadien eines mittleren Teilchendurchmessers ($d_{50}$) von 0,4 $\mu$m, erhalten durch Emulsionspolymerisation.

VII. 10 Gew.-% Polytetrafluorethylen enthaltendes Polymerisat nach VI. dadurch hergestellt, daß das ABS-Pfropfpolymerisat als Latex und das Polytetrafluorethylen als Dispersion gemischt, koaguliert und als Cofällung gemeinsam aufgearbeitet werden.

VIII. 10 Gew.-% Silikonharz enthaltendes Polymerisat nach VI. dadurch hergestellt, daß das Pfropfpolymerisat als Latex und das Silikonharz als Emulsion gemischt, koaguliert und als Cofällung gemeinsam aufgearbeitet werden.

IX. Triphenylphosphat.

X. Phosphorsäure-2,4-di-(1-phenylethyl)-phenyl-bis-phenyl-ester nach Beispiel 1 der deutschen Patentanmeldung P 3 940 927.9 (Le A 27 145).

XI. Phosphorsäure-phenyl-bis-((1-phenylethyl)-phenyl)-ester nach Beispiel 1 der deutschen Patentanmeldung P 3 824 356.3 (Le A 26 015).

XII. Phosphorsäureester aus 1 Mol Triphenylphosphat und 1 Äquivalent Novolak (aus p-Kresol, Kernzahl ca. 5).

XIII. Phosphorsäureester aus 1 Mol Triphenylphosphat und 1,5 Äquivalent Novolak (aus p-Kresol, Kernzahl ca. 5).

XIV. Phosphorsäureester aus 1 Mol Triphenylphosphat und 2 Äquivalent Novolak (aus p-Kresol, Kernzahl ca. 5).
XV. Phosphorsäureester aus 1 Mol Triphenylphosphat und 1 Äquivalent Novolak (aus p-Kresol, Kernzahl ca. 3).

B. Herstellung der verwendeten Phosphoradditive

1. Phosphorsäureester aus 1 Mol Triphenylphosphat und 1 Äquivalent Novolak (aus p-Kresol, Kernzahl ca. 5).
1.631,5 g (5 Mol) Triphenylphosphat, 599,5 g (5 Gramm äquiv.) eines Novolaks aus p-Kresol und Formaldehyd (OH-Zahl 468, Kernzahl ca. 5) und 14,3 g Magnesiumchlorid (0,15 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 3 Stunden bei fallendem Vakuum von 300 bis 3 mbar und Temperaturen von 200 bis 210 °C über Kolonne und Kühler 482,5 g Produkt (OH-Zahl 583) abdestilliert (5 Mol Phenol: 470,6 g). Anschließend wird 1 Stunde bei 210 °C und einem Vakuum von 3 mbar ausgeheizt.
Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1.693,7 g = 96,2 % der Theorie. Das Produkt ist harzig, der Phosphorgehalt liegt bei 8,9 % (theoretisch 8,8 %) und die OH-Zahl bei 4.
2. Phosphorsäureester aus 1 Mol Triphenylphosphat und 1,5 Äquivalent Nololak (aus p-Kresol, Kernzahl ca 5).
1.305,2 g (4 Mol) Triphenylphosphat, 719,4 g (6 Gramm äquiv.) eines Novolaks aus p-Kresol und Formaldehyd (OH-Zahl 468, Kernzahl ca 5) und 11,4 g Magnesiumchlorid (0,12 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 3,5 Stunden bei fallendem Vakuum von 300 bis 3 mbar und Temperaturen von 200 bis 210 °C über Kolonne und Kühler 580,4 g Produkt (OH-Zahl 578) abdestilliert (6 Mol Phenol: 564,6 g). Anschließend wird 1 Stunde bei 210 °C und einem Vakuum von 3 mbar ausgeheizt.
Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die lösung eingeengt. Die Ausbeute beträgt 1.378,6 g = 94,3 % der Theorie. Der Erweichungsbeginn liegt auf der Kofler-Heizbank bei 72 °C, der Phosphorgehalt beläuft sich auf 9,0 % (theoretisch 8,5 %) und die OH-Zahl auf 0.
3. Phosphorsäureester aus 1 Mol Triphenylphosphat und 2 Äquivalent Novolak (aus p-Kresol, Kernzahl ca. 5).
1.142,0 g (3,5 Mol) Triphenylphosphat, 839,3 g (7 Gramm äquiv.) eines Novolaks aus p-Kresol und Formaldehyd (OH-Zahl 468, Kernzahl ca. 5) und 10,0 g Magnesiumchlorid (0,09 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 4 Stunden bei fallendem Vakuum von 300 bis 3 mbar und Temperaturen von 200 bis 210 °C über Kolonne und Kühler 681,7 g Produkt (OH-Zahl 550) abdestilliert (7 Mol Phenol: 658,7 g). Anschließend wird 1 Stunde bei 210 °C und einem Vakuum von 3 mbar ausgeheizt. Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1.304,7 g = 98,6 % der Theorie. Der Erweichungsbeginn liegt auf der Kofler-Heizbank bei 141 °C, der Phosphorgehalt beläuft sich auf 8,2 % (theoretisch 8,2 %) und die OH-Zahl auf 0.

4. Phosphorsäureester aus 1 Mol Triphenylphosphat und 1 Äquivalent Novolak (aus p-Kresol, Kernzahl ca. 3).
1.631,5 g (5 Mol) Triphenylphosphat, 578,5 g (5 Gramm äquiv.) eines Novolaks aus p-Kresol und Formaldehyd (OH-Zahl 485, Kernzahl ca. 3) und 14,3 g Magnesiumchlorid (0,15 Mol) werden in einem 4 l-Kolben, der mit regelbarer Pilzheizlaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend

werden in 3,5 Stunden bei fallendem Vakuum von 300 bis 3 mbar und Temperaturen von 200 bis 210 ° C über Kolonne und Kühler 472,0 gProdukt (OH-Zahl 547) abdestilliert (5 Mol Phenol: 470,6 g) Anschließend wird 1 Stunde bei 210 ° C und einem Vakuum von 3 mbar ausgeheizt.
Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die lösung eingeengt. Die Ausbeute beträgt 1.652,0 g = 95,0 % der Theorie. Das Produkt ist harzig, der Phosphorgehalt beläuft sich auf 8,9 % (theoretisch 8,9 %) und die OH-Zahl auf 7.

Herstellung und Prüfung der Formmassen, Ergebnisse:

Auf einem Banbury-Innenkneter (Fa. Pomini-Farrel) vom Typ BR (1,2 1) oder Typ OOC (3 1) werden die jeweils benötigten Bestandteile bei 230 ° C bis 240 ° C in den in Tabelle 1 angegebenen Mengen (Angaben in Gewichtsteilen) gemischt und zu Granulat aufgearbeitet.

Tabelle 1: Eingesetzte Komponenten (Angaben in Gew.-%)

| Komponente | I. | II. | III. | IV. | V. | VI. | VII. | VIII. | IX. | X. | XI. | XII. | XIII. | XIV. | XV. |
|---|---|---|---|---|---|---|---|---|---|---|---|---|---|---|---|
| Vergleich 1 | 65,0 | | | 15,5 | | 8,0 | 4,0 | | 7,5 | | | | | | |
| Vergleich 2 | | 65,0 | | 10,0 | | 8,0 | 4,0 | | 13,0 | | | | | | |
| Vergleich 3 | 65,0 | | | 10,2 | | 10,0 | 2,3 | | | 12,5 | | | | | |
| Vergleich 4 | 65,0 | | | 13,0 | | 8,0 | 4,0 | | | | 10,0 | | | | |
| Vergleich 5 | | 65,0 | | 11,0 | | 4,0 | 4,0 | | | | 16,0 | | | | |
| Vergleich 6 | 65,0 | | | 11,0 | | 4,0 | 4,0 | | | 8,0 | | | 8,0 | | |
| Beispiel 1 | 65,0 | | | 13,0 | | 8,0 | 4,0 | | | | | 10,0 | | | |
| Beispiel 2 | 65,0 | | | 13,0 | | 8,0 | 4,0 | | | | | | 10,0 | | |
| Beispiel 3 | 65,0 | | | 13,0 | | 8,0 | 4,0 | | | | | | | 10,0 | |
| Beispiel 4 | 65,0 | | | 13,0 | | 8,0 | 4,0 | | | | | | | | 10,0 |
| Beispiel 5 | 70,0 | | 10,0 | | | | | 10,0 | | | | 10,0 | | | |
| Beispiel 6 | | 65,0 | 6,5 | 6,5 | | 8,0 | 4,0 | | | | | 10,0 | | | |
| Beispiel 7 | 55,0 | | 8,0 | | 13,0 | 8,0 | 4,0 | | | | | 12,0 | | | |
| Beispiel 8 | | 70,0 | | | | 10,0 | 4,0 | | | | | 16,0 | | | |
| Beispiel 9 | | 70,0 | | | | 10,0 | 4,0 | | | | | | | | 16,0 |
| Beispiel 10 | | 76,0 | | | | 8,0 | 4,0 | | | | | 12,0 | | | |

Die Formmassen werden bei 260° C zu Prüfkörpern spritzgegossen (Aggregat: Werner Pfleiderer Schnecke DKS 275, Schließkraft 275 MP, Schneckendurchmesser 56 mm, Länge L/D-23/1) und folgenden Tests unterzogen:

- Schlagzähigkeit nach DIN 43 543 ($a_n$)
- Kerbschlagzähigkeit nach DIN 53 543 ($a_k$)

- Wärmeformbeständigkeit nach DIN 53 460 (Vicat B)
- Brandtest nach Vorschrift Underwriter Laboratories (UL 94)

Tabelle 2 zeigt die erhaltenen Prüfdaten.

Tabelle 2: Prüfdaten

| | $a_n$ kJ/m² | $a_k$ kJ/m² | Vicat B °C | UL 94 1,6 mm-Stab |
|---|---|---|---|---|
| Vergleich 1 | n.g. * | 17 | 101 | V-0 |
| Vergleich 2 | n.g. | 11 | 87 | V-0 |
| Vergleich 3 | n.g. | 6 | 98 | V-0 |
| Vergleich 4 | n.g. | 12 | 102 | V-0 |
| Vergelich 5 | n.g. | 5 | 87 | V-0 |
| Vergleich 6 | n.g. | 8 | 96 | V-0 |
| Beispiel 1 | n.g. | 14 | 115 | V-0 |
| Beispiel 2 | n.g. | 7 | 119 | V-0 |
| Beispiel 3 | n.g. | 6 | 126 | V-0 |
| Beispiel 4 | n.g. | 6 | 119 | V-0 |
| Beispiel 5 | n.g. | 11 | 118 | V-0 |
| Beispiel 6 | n.g. | 6 | 121 | V-0 |
| Beispiel 7 | n.g. | 12 | 120 | V-0 |
| Beispiel 8 | n.g. | 24 | 113 | V-0 |
| Beispiel 9 | n.g. | 21 | 112 | V-0 |
| Beispiel 10 | n.g. | 25 | 120 | V-0 |

*nicht gebrochen

Aus den Tabellen 1 und 2 geht hervor, daß die erfindungsgemäßen Formmassen (Beispiele 1 bis 10) mit den eingesetzten schwerflüchtigen Phosphaten von Novolaken in Gegenwart üblicher Mengen Polytetrafluorethylen oder Silikonharz einen Flammschutz aufweisen, dem die Beurteilung V-0 bei 1,6 mm Prüfkörperdicke nach UL 94 zukommt. Die erfindungsgemäßen Formmassen (Beispiele 1-10) weisen den Formmassen der Vergleichsbeispiele gegenüber aber deutlich höhere Vicat-Temperaturen auf (ca. 120 °C gegenüber ca. 100 °C).

## Patentansprüche

**1.** Thermoplastische Polycarbonatformmassen enthaltend

A) 40 bis 90 Gewichtsteile eines thermoplastischen aromatischen Polycarbonats,
B) gegebenenfalls ein thermoplastisches Copolymerisat, bzw. Polykondensat, bestehend aus
B.1) 0 bis 50 Gewichtsteilen eines thermoplastischen Copolymerisats aus 50 bis 95 Gew.-% Styrol, α-Methylstyrol, kernalkyliertem Styrol, Halogen-Styrol oder Mischungen daraus und 5 bis 50 Gew.-% Acrylnitril, Methacrylnitril, Alkylacrylat, Alkylmethacrylat, Maleinsäureanhydrid, N-substituiertem Maleinimid, Vinylacetat oder Mischungen daraus und
B.2) 0 bis 80 Gewichtsteilen eines thermoplastischen Polyalkylenterephthalats,
C) 1 bis 25 Gewichtsteile Pfropfpolymerisat hergestellt durch Pfropfung von
C.1) 5 bis 70 Gewichtsteilen einer Mischung aus:
C.1.1) 50 bis 95 Gew.-% Styrol, α-Methylstyrol, Halogenstyrol, kernalkyliertem Styrol, Methylmethacrylat oder Mischungen daraus und
C.1.2) 5 bis 50 Gew.-% (Meth)-Acrylnitril, Methylmethacrylat, Maleinsäureanhydrid, N-substituiertem Maleinimid oder Mischungen daraus auf
C.2) 30 bis 95 Gewichtsteilen eines Kautschuks mit einer Glastemperatur TG $\leq 10^\circ$ C,
D) 1 bis 25 Gewichtsteile, bezogen jeweils auf 100 Gewichtsteile Gesamtgewicht aus A), C) und gegebenenfalls B), einer Phosphorverbindung,
E) wenigstens ein Antidrippingmittel, bestehend bezogen auf 100 Gewichtsteile Gesamtgewicht aus A), C) und gegebenenfalls B) aus
E.1) 0,05 bis 5 Gewichtsteilen, bezogen auf 100 Gewichtsteile A), C) und gegebenenfalls B), eines Tetrafluorethylenpolymerisats mit mittleren Teilchengrößen von 0,05 bis 20 μm und einer Dichte von 1,2 bis 1,9 g/cm$^3$, und/oder
E.2) 0,1 bis 10 Gewichtsteilen, bezogen auf 100 Gewichtsteile A), C) und gegebenenfalls B), eines Silikonharzes, der Summenformel (VII),

$$R_xSi(OR')_yO_{\frac{4-x-y}{2}} \qquad \text{(VII)}$$

worin

- R für einen einwertigen Kohlenwasserstoffrest steht, der gegebenenfalls selbst substituiert sein kann,
- R' eine Alkylgruppe oder Wasserstoff ist,
- x einen Wert von 0,75 bis 1,75 und
- y einen Wert von 0,0001 bis 0,5 besitzen

und worin das Silikonharz aufgebaut ist aus Einheiten der Formel $SiO_{4/2}$, $RSiO_{3/2}$, $R_2SiO_{2/2}$ und/oder $R_3SiO_{1/2}$, dadurch gekennzeichnet, daß sie als Phosphorverbindungen D) solche der Formel (I) enthalten,

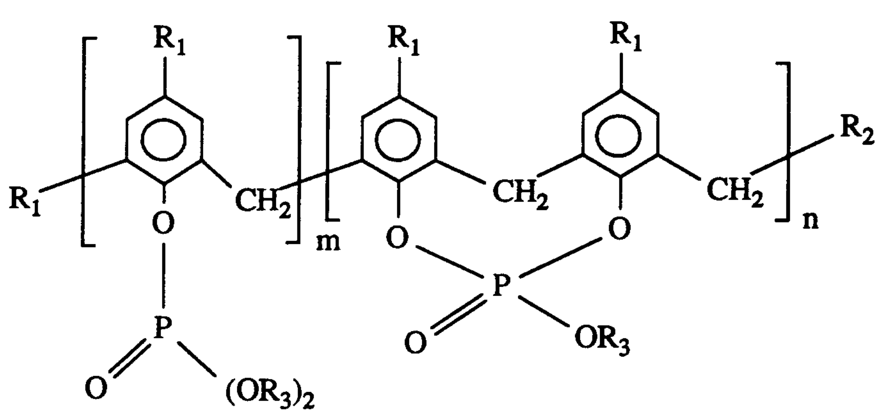

worin

- $R_1$ Wasserstoff oder Alkyl mit 1 bis 8 Kohlenstoffatomen,
- $R_2$

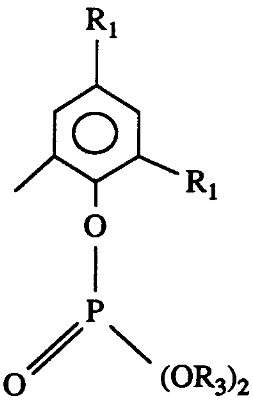

oder

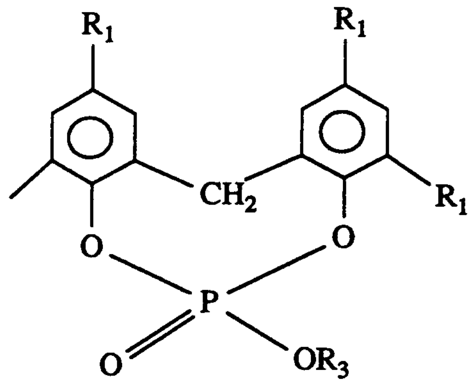

und

$R_3$ Phenyl, wobei dieses durch Alkyl mit 1 bis 4 Kohlenstoffatomen, Phenyl und Aralkyl substituiert sein kann, sind,

worin bei m gleich null n mindestens 1 und $R_2$ gleich

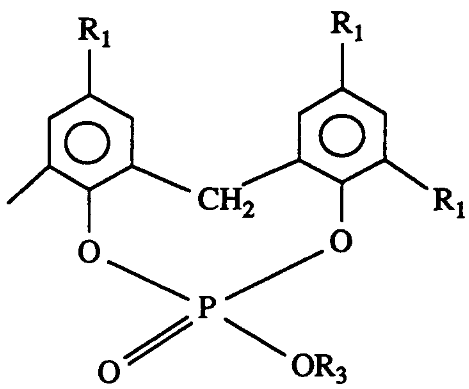

sein muß,

worin bei n gleich null m mindestens 2 und $R_2$ gleich

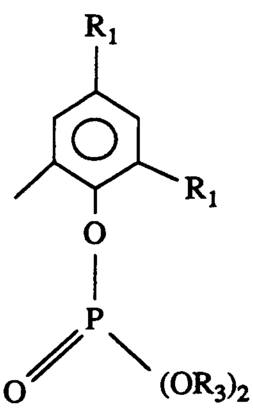

sein muß, und worin

m eine ganze Zahl von Null bis 12 und n eine ganze Zahl von Null bis 5 sind, wobei die Kernzahl des Polyphenolmoleküls, also die Zahl der Benzolringe der Verbindung (I) ohne die Reste $R_3$, nicht höher als 12 ist.

2. Formmassen gemäß Anspruch 1, dadurch gekennzeichnet, daß die Komponente D) in Mengen von 2 bis 20 Gewichtsteilen vorliegt.

3. Thermoplastische Polycarbonatformmassen gemäß Anspruch 1, dadurch gekennzeichnet, daß die Komponente A) ein thermoplastisches Polycarbonat auf Basis der Diphenole der Formel (IV)

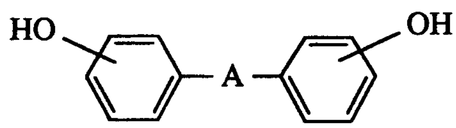

(IV)

und gegebenenfalls der Formel (IVa)

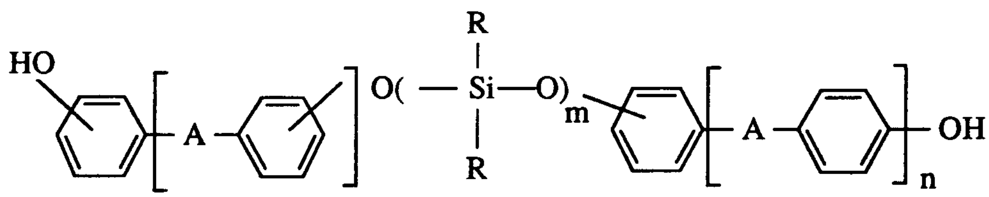

(IVa)

ist, worin

A eine Einfachbindung, $C_1$-$C_5$-Alkylen, $C_2$-$C_5$-Alkyliden, ein $C_5$-$C_6$-Cycloalkyliden, das noch durch Methylgruppen substituiert sein kann, -O-; -S-, $-SO_2-$ ist, die aromatischen Bereiche durch Methylgruppen oder Halogenatome substituiert sein können, n = 1 oder null ist, die R's gleich oder verschieden sein und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine Zahl zwischen 5 und 100 ist, und wobei der Gewichtsteil an Diphenolen der Formel (IVa) in den Copolycarbonaten jeweils so bemessen ist, daß der Gehalt an Diorganosiloxy-Einheiten (V)

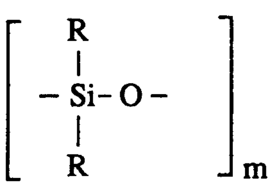

(V)

in Polycarbonat A) zwischen 1 und 25 Gew.-% beträgt.

4. Polycarbonatformmassen gemäß Anspruch 1, dadurch gekennzeichnet, daß die Komponente A) ein Gemisch aus siloxanhaltigen Polycarbonaten und siloxanfreien Polycarbonaten ist.

5. Formmassen gemäß Anspruch 1, dadurch gekennzeichnet, daß C) aus C.1) 15 bis 60 Gewichtsteilen einer Mischung C.1.1) und C.1.2) und 40 bis 85 Gewichtsteilen C.2) hergestellt ist.

6. Formmassen gemäß Anspruch 1, dadurch gekennzeichnet, daß die Komponente E.1) in Mengen von 0,1 bis 1,0 Gewichtsteilen vorliegt.

7. Formmassen gemäß Anspruch 1, dadurch gekennzeichnet, daß die Komponente E.1) als koagulierte Mischung von Emulsionen der Tetrafluorethylenpolymerisate E.1) mit Emulsionen der Pfropfpolymerisate C) eingesetzt wird, worin das Gewichtsverhältnis Pfropfpolymerisat C) zum Tetrafluorethylenpolymerisat E.1) zwischen 95:5 und 60:40 liegt und der Gehalt an Cofällung von C) und E.1), bezogen auf 100 Gewichtsteile A), C) und gegebenenfalls B), zwischen 0,1 und 20,0 Gewichtsteilen liegt.

8. Formmassen gemäß Anspruch 1, dadurch gekennzeichnet, daß die Komponente E.2) in Mengen von

0,2 bis 3,0 Gewichtsteilen vorliegt.

**9.** Formmassen gemäß Anspruch 1, dadurch gekennzeichnet, daß die Komponente E.2) als koagulierte Mischung von Emulsionen des Silikonharzes E.2), gegebenenfalls auch eine Emulsion einer Lösung von ihm, mit Emulsionen der Pfropfpolymerisate C) eingesetzt wird, worin das Gewichtsverhältnis Pfropfpolymerisat C) zum Silikonharz E.2) zwischen 99,9:0,1 und 50:50 liegt und der Gehalt an Cofällung von C) und E.2), bezogen auf 100 Gewichtsteile A), C) und gegebenenfalls B), zwischen 0,1 und 30,0 Gewichtsteilen liegt.

**10.** Formmassen gemäß Anspruch 1, enthaltend zusätzlich thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/oder andere Flammschutzmittel Metall- und Halogenverbindungen.

**11.** Verfahren zur Herstellung der Polycarbonatformmassen der Ansprüche 1 bis 10, dadurch gekennzeichnet, daß man die Komponenten A), C), D), E) und gegebenenfalls B), thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, und/oder Antistatika in bekannter Weise vermischt und bei Temperaturen von 200 °C bis 330 °C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.